# EUROPEAN PATENT APPLICATION

(11) **EP 3 196 837 A1**
(43) Date of publication of application: **26.07.2017**
(21) Application number: 16151866.7
(22) Date of filing: 19.01.2016
(51) Int. Cl.: G06Q 50/28, G06Q 10/08

(54) **A METHOD FOR MANAGING TEMPERATURE DATA IN A RETAIL DISTRIBUTION CHAIN**

(71) Applicant: Danfoss A/S, 6430 Nordborg (DK)
(72) Inventor: LINDHARDT, Bodil, 6400 Sønderborg (DK); BREEDIJK, Robert, 3043BP Rotterdam (NL); NORUP-JENSEN, Hans, 6430 Nordborg (DK); BOJSEN, Rikke, 6200 Aabenraa (DK)

(57) **Abstract**

A method for managing a retail distribution chain, in which items are distributed from one or more producers (1) to one or more retail stores (14), via one or more closed compartments (4, 6, 7, 8, 10, 11, 13, 15), said items being transported in collis (2) being packed on pallets (3), is provided. Relationships between collis (2), pallets (3) and closed compartments (4, 6, 7, 8, 1 0, 11, 13, 15) are registered and provided to a central data storage device. Temperatures prevailing inside the closed compartment (4, 6, 7, 8, 10, 11, 13, 15) are monitored and provided to the central data storage device. Thereby unbroken temperature data relating to each colli (2) in the distribution chain from producer (1) to retail store (14) is provided at the central data storage device.

## Description

### FI ELD OF THE I NVENTI ON

The present invention relates to a method for managing a retail distribution chain, in which items are distributed from one or more producers to one or more retail stores. More particularly, the present invention relates to managing temperature data in such a distribution chain.

### BACKGROUND OF THE I NVENTI ON

Some items, such as foodstuff and certain kinds of medical drugs, must be stored at a temperature level which is within a specified temperature range, in order to prevent degradation of the items. When such items are transported from a producer to a retail store, the temperature at which the items are stored must be monitored in order to ensure that the items are not subjected to unacceptable temperatures during the transport. If this occurs, it may be necessary to discard the items.

Previously, each party of the distribution chain, i.e. producers, transport companies, storage facilities, retail stores, etc., has individually monitored temperatures relating to the items as long as the party is responsible for the items. However, temperature data collected by the individual parties of the distribution chain are normally not shared with or handed over to the other parties of the distribution chain. This makes it difficult to gain an overview of conditions which an item has been subjected to during distribution from a producer to a retail store. Furthermore, this may lead to items being discarded, due to legislation. However, even though such discarded goods have been stored under conditions which appear to be unacceptable, the circumstances may be such that there are no implications for neither quality nor health or safety of the goods. In these cases discarding the goods becomes pointless, and it is therefore desirable to be able to determine whether or not goods which have been stored under unacceptable conditions have in fact been damaged or been subject to a reduction in quality. Thereby it can be prevented that undamaged goods are discarded, and a reduction in waste of goods without compromising quality, health and safety can be obtained.

### DESCRIPTION OF THE INVENTION

It is an object of embodiments of the invention to provide a method for managing a retail distribution chain, the method providing unbroken temperature data relating to items being distributed, in the entire distribution chain from producer to retail store.

It is a further object of embodiments of the invention to provide a method for managing a retail distribution chain, the method causing a reduction in the amount of undamaged items being discarded as a precautionary measure.

According to a first aspect the invention provides a method for managing a retail distribution chain, in which items are distributed from one or more producers to one or more retail stores, via one or more closed compartments, said items being transported in collis being packed on pallets, the method comprising the steps of:
- providing each colli with a colli ID,
- providing each pallet with a unique pallet ID,
- providing each closed compartment with a unique compartment ID,
- for each colli, registering a relationship between the colli and each pallet on which the colli is packed during the distribution process,
- for each pallet, registering a relationship between the pallet and each closed compartment in which the pallet is positioned during the distribution process,
- for each closed compartment, monitoring a temperature prevailing inside the closed compartment,
- providing information regarding registered relationships between collis and pallets, registered relationships between pallets and closed compartments and monitored temperatures prevailing inside the closed compartments to a central data storage device, thereby providing unbroken temperature data relating to each colli in the distribution chain from producer to retail store, at the central data storage device.

The method of the invention is for managing a retail distribution chain. In the present context, the term 'retail distribution chain' should be interpreted to mean a chain of parties involved with distributing items from one or more producers to one or more retail stores. The parties of the distribution chain could, e.g., include the producers, the retail stores, one or more intermediate storage facilities and one or more transporting or distributing companies.

The items are preferably temperature sensitive items, such as foodstuff, medical drugs, etc. The producers include manufacturers which manufacture the items being distributed and eventually sold to a consumer at a retail store. However, the producers could also include subcontractors or ingredient suppliers supplying ingredients, raw materials or intermediate products to the manufacturing producers. The retail stores could include traditional retail stores, such as supermarkets or other food stores. In the case that the items are medical drugs, the term 'retail store' should also be interpreted to include drug stores, pharmacies, hospitals, clinics, etc.

The items being distributed in the distribution chain are distributed via one or more closed compartments. The closed compartments may, e.g., include rooms at storage facilities at the producers, at the retail stores, and/or at intermediate storage facilities. Furthermore, the closed compartments may include transporting compartments, such as containers or cargo compartments of lorries, vans, trucks, ships, etc. Accordingly, the closed compartments represent various spaces where an item is contained during the transport of the item from the producer to the retail store, as well as during storage at the producer and the retail store.

The items are transported in collis being packed on pallets. In the present context the term 'colli' should be interpreted to mean a package comprising a number of items, being transported together. A colli is normally not opened during transport, i.e. the individual items in a colli will normally not be accessible until the colli has been received at a retail store, and the items are offered for sale, e.g. in a display case arranged at the retail store. A colli may be regarded as the smallest unit on a pallet which will, under normal circumstances, be handled independently during the distribution from the producer to the retail store.

During transport, the collis are packed on pallets. A pallet may have only a single colli packed thereon, but normally a pallet will have several collis packed thereon, e.g. ten collis per pallet. A colli may be packed on the same pallet during the entire transport from the producer to the retail store. However, repacking may take place during the transport, in which case at least some collis are transferred from one pallet to another. Thereby a pallet received at a retail store may, e.g., contain collis originating from two or more producers.

According to the method of the invention, each colli is provided with a colli ID. The colli ID may be a unique I D. Alternatively, a given colli I D could be provided to two or more collis. For instance, the colli ID could be a batch number identifying a production batch which the items of the colli belongs to.

Furthermore, each pallet is provided with a unique pallet ID, and each closed compartment is provided with a unique compartment ID. Accordingly, each pallet and each closed compartment can be uniquely identified.

Next, for each colli, a relationship between the colli and each pallet on which the colli is packed during the distribution process is registered. If the colli remains on the same pallet during the entire transport from the producer to the retail store, this step simply includes registering a relationship between the colli and that pallet. However, in the case that the colli is repacked during the transport, a relationship must be registered between the colli and the pallet which the colli is packed on at the producer, as well as a relationship between the colli and each pallet which the colli is transferred to during the transport. The registration of a relationship between a colli and a pallet may advantageously include temporal information, such as time stamps, indicating at which point in time the colli was packed on and/or transferred away from the pallet.

Furthermore, for each pallet, a relationship between the pallet and each closed compartment in which the pallet is positioned during the distribution process is registered. The registration of a relationship between a pallet and a closed compartment may advantageously include temporal information, such as time stamps, indicating at which point in time the pallet was received in and/or removed from the closed compartment.

The registered relationships between collis and pallets and between pallets and closed compartments provide information regarding which closed compartments a given colli is arranged in during the distribution process, and preferably regarding at which times and for how long the colli was arranged in the various closed compartments.

For each closed compartment, a temperature prevailing inside the closed compartment is monitored. Accordingly, information is further provided regarding temperature levels which a given colli has been subjected to.

Finally, information regarding registered relationships between collis and pallets, registered relationships between pallets and closed compartments and monitored temperatures prevailing inside the closed compartments is provided to a central data storage device, such as a central server, a cloud service, etc. Thereby information regarding temperatures which a given colli has been subjected to, in the entire distribution chain, is made available at the central data storage device. Accordingly, any party of the distribution chain may, at any time, access this information, and thereby gain an overview of which temperature levels a given colli has previously been subjected to. This includes information which was collected while the colli was handled by one of the other parties of the distribution chain. For instance, this allows a person who discovers that a given colli might have been subjected to temperatures outside an acceptable temperature range, to investigate whether or not this is in fact the case. For instance, the colli may have been subjected to a too high temperature, but only for a time period which is so short that the items of the colli have not been adversely affected. In this case a colli, which would previously have been discarded purely as a precautionary measure, may be accepted. Thereby food waste is reduced.

Furthermore, the method of the invention improves food safety, since all goods can be checked in an easy and convenient manner. For instance, goods being transported in a truck may have a temperature within an acceptable range when the final destination is reached, even though the refrigeration system of the truck has been malfunctioning or inoperative during some of the transport time. In this case, a person receiving the goods, or an automatic system, can conclude, using the method of the invention, whether or not the cooling provided during the transport has been sufficient, in order to ensure that the goods have not been damaged.

Furthermore, the method of the invention allows systematic check of all goods upon delivery. Previously only few and randomly selected goods were checked, due to the burden involved.

It is also an advantage of the method of the invention that an overview of temperature data for goods can be gained in an easy and convenient manner.

Finally, in the case that damaged goods or goods which are not healthy or safe have been distributed, the method of the invention provides information regarding where the potentially unhealthy or unsafe goods have been delivered, and who might have received the goods, in an easy manner. This allows such goods to be quickly located and recalled, thereby reducing the risk of health implications arising from damaged goods.

The colli I Ds and the unique pallet I Ds may be in the form of a machine readable code, and the step of registering a relationship between a colli and a pallet may comprise reading the machine readable codes of the colli ID and the pallet ID. The machine readable codes may, e.g., be in the form of barcodes, QR codes, radio frequency identification (RFI D) tags, or any other suitable kind of machine readable code. In the case that the colli I Ds are in the form of RFI D tags, a given colli may be provided with an RFI D tag. Alternatively or additionally, the items being contained in the colli may each be provided with an RFID tag, in which case the colli ID could be a sum or combination of one or more of the RFID tags of the items of the colli. In the case that the individual items of a colli are provided with an RFID tag, or another suitable kind of ID, the temperature data relating to the colli may further be associated with the items contained in the colli. Thereby it is possible to obtain temperature information relating to a specific item.

According to this embodiment, the relationship between a colli and a pallet can easily be registered by means of a suitable device being capable of reading the machine readable codes. The device may even be capable of communicating, directly or indirectly, with the central data storage device, thereby making information regarding a relationship between a colli and a pallet available at the central data storage device, essentially immediately when the relationship has been registered.

Similarly, the unique pallet IDs and the unique compartment IDs may be in the form of a machine readable code, and the step of registering a relationship between a pallet and a closed compartment may comprise reading the machine readable codes of the pallet ID and the compartment ID. The remarks set forth above are equally applicable here.

The step of providing monitored temperatures to the central data storage device may be performed in real time. This includes that the temperature may be substantially continuously monitored, and that the monitored temperature is provided substantially continuously to the central storage device. As an alternative, the temperature may be substantially continuously monitored, and a representative temperature value is provided to the central data storage device at substantially regular time intervals, such as every 5 minutes, every 15 minutes, every 30 minutes, etc., depending on requirements set by the various parties of the distribution chain. As another alternative, the temperature may be measured at substantially regular time intervals, such as every 5 minutes, every 15 minutes, every 30 minutes, etc., and the measured temperatures may be provided to the central data storage device substantially immediately after each measurement.

According to this embodiment, the temperature information is available at the central data storage device immediately after the temperature measurements have been performed. This allows any irregularities in the temperatures which the items are subjected to in the distribution chain to be quickly discovered, thereby allowing a party of the distribution chain to act upon such irregularities.

The method may further comprise the step of generating a warning in the case that a colli is likely to have experienced temperatures outside an acceptable temperature range. The warning may be forwarded to all of the parties of the distribution chain, or it may only be forwarded to some of the parties of the distribution chain, e.g. only the party which is currently handling the colli, only the party currently handling the colli and parties which will receive the colli at a later point in time, or only the party handling the colli at the time where the colli was possibly subjected to temperatures outside the acceptable temperature range. Alternative or additionally, the warning may be stored at the central data storage device, along with the temperature information and the information regarding relationships between collis, pallets and closed compartments. Thereby a party of the distribution chain automatically sees the warning when it gains access to the information stored at the central storage device.

When a party of the distribution chain receives a warning as described above, it may react to the warning, e.g. by investigating further whether or not the colli has in fact been subjected to temperatures which adversely affect the items in the colli to the extent that the items must be discarded. If this is not the case, the warning can simply be ignored, and the colli can be allowed to proceed to the retail store. If, on the other hand, it turns out that the colli has in fact been subjected to temperatures which adversely affect the items in the colli, the pallet having the colli packed thereon can be stopped before it reaches its next destination. Thereby time can be saved, since a driver may for instance turn around instead of proceeding to a retail store or an intermediate storage, or it may be unnecessary to unload a pallet from a truck. Furthermore, the warning may allow a party of the distribution chain which is currently handling the colli to take steps in order to ensure that the temperature inside the closed compartment where the colli is presently accommodated, is brought into an acceptable temperature range, thereby preventing that the items in the colli are damaged.

The warnings may be controlled by a rules engine in which the individual parties of the distribution chain may define criteria for receiving warnings. Such criteria could, e.g., include how much and for how long the monitored temperatures are allowed to be outside the acceptable range before a warning is generated, and for which parts of the distribution chain the party wants to receive warnings. Furthermore, the rules engine may specify different criteria for different types of items being distributed. For instance, stricter rules may be applied to items being very temperature sensitive than to items being less temperature sensitive. Furthermore, items having a high thermal capacity may be allowed to be arranged in a compartment with an air temperature outside the acceptable temperature range for a longer period of time than items having a low thermal capacity.

The method may further comprise the steps of performing a manual temperature measurement of a colli and/or a pallet, establishing a relationship between the manual temperature measurement and the colli and/or pallet, and adding the manual temperature measurement to the temperature data relating to the colli and/or pallet at the central data storage device.

According to this embodiment, the 'automatic' measurements of temperatures prevailing inside the closed compartments are supplemented by manual temperature measurements of a colli and/or a pallet. This may, e.g., be performed by inserting a temperature probe into a pallet or even into a colli, in order to measure a temperature in a centre part of the pallet or the colli. This temperature is more representative for the temperature which the items in the collis packed on the pallet have actually been subjected to, than the air temperature inside the closed compartment where the pallet is accommodated. Accordingly, a manual temperature measurement may reveal that, even though a colli has been accommodated in a closed compartment with an air temperature slightly outside an acceptable temperature range, the items in the colli may not have experienced unacceptable temperature levels, and therefore the items have not been damaged.

The manual temperature measurements are provided to the central data storage device, and they are therefore readily available along with the 'automatic' temperature measurements, when a party of the distribution chain accesses the central data storage device in order to obtain information relating to a specific colli, i.e. the manual temperature measurements are also shared among the various parties of the distribution chain.

The method may further comprise the steps of performing a manual temperature measurement inside a closed compartment, establishing a relationship between the manual temperature measurement and the closed compartment, and adding the manual temperature measurement to the temperature data relating to the closed compartment at the central data storage device.

According to this embodiment, the 'automatic' temperature measurements are supplemented by manual temperature measurements of an air temperature prevailing inside a closed compartment. This may, e.g., be relevant in the case that a driver receives a warning that the temperature inside the cargo compartment of his or her truck is too high. The driver may then stop the truck and enter the cargo compartment in order to check whether the air temperature prevailing inside the cargo compartment is in fact too high, or the warning was a result of a malfunctioning or poorly calibrated temperature sensor or the like. This allows the driver to act upon the received warning.

The method may further comprise the step of a user accessing stored temperature data relating to a colli and/or a pallet when the colli is transferred from one pallet to another, and/or when the pallet is transferred from one closed compartment to another.

A user accessing the stored temperature data may advantageously be a representative for a party of the distribution chain. For instance, the user may be a person being responsible for receiving or handing over one or more pallets, or for repacking collis on pallets. During such a handover process it may be desirable to check the 'history' of each of the collis being transported on the pallet, e.g. in order to determine whether the collis should be accepted or rejected.

According to one embodiment, at least one colli ID may be provided to a subset of collis comprising two or more collis originating from a single batch of goods, the two or more collis of the subset of collis thereby being provided with the same colli ID. According to this embodiment, the colli ID is not a unique ID. Instead, the colli ID is or corresponds to a batch number, for instance the production of a given producer relating to a specific date. The items of a full batch of goods will normally be packed into several collis, which will subsequently be packed on several pallets, which are distributed to a number of different retail stores, possibly using a number of different transporting agents. However, once a given colli has been packed on a specific pallet, it is registered that a colli from that batch is transported along with that pallet, and it is possible to track the path of the colli, due to the unique ID of the pallet, even though the colli is not provided with a unique colli ID. However, the batch number provides valuable information regarding the producer, the type of items and the exact batch of goods.

The method may further comprise the steps of logging additional data relating to at least one closed compartment and storing the additional logged data at the central storage device along with the registered monitored temperatures relating to the closed compartment(s). The additional logged data could, e.g., include humidity inside the closed compartment(s) and/or any other suitable kind of data which may be relevant with respect to degradation or preservation of the goods being distributed.

According to a second aspect the invention provides a method for managing a retail distribution chain, in which items are distributed from one or more producers to one or more retail stores, via one or more closed compartments, said items being transported in collis, the method comprising the steps of:
- providing each colli with a unique colli ID,
- providing each closed compartment with a unique compartment ID,
- for each colli, registering a relationship between the colli and each closed compartment in which the colli is positioned during the distribution process,
- for each closed compartment, monitoring a temperature prevailing inside the closed compartment,
- providing information regarding registered relationships between collis and closed compartments and monitored temperatures prevailing inside the closed compartments to a central data storage device, thereby providing unbroken temperature data relating to each colli in the distribution chain from producer to retail store, at the central data storage device.

The method according to the second aspect of the invention is very similar to the method according to the first aspect of the invention, and the remarks set forth above with reference to the first aspect of the invention are therefore equally applicable here.

However, according to the method of the second aspect of the invention, the collis are not necessarily packed on pallets. Instead, the relationship between a given colli and the compartments in which the colli is positioned during the distribution process is established directly, via the unique colli ID.

In the case that the collis are in fact packed on pallets, and no re-packing takes place during the distribution process, a unique pallet ID could, e.g., be applied as the unique colli ID for all of the collis being packed on a given pallet.

### BRI EF DESCRI PTI ON OF THE DRAWINGS

The invention will now be described in further detail with reference to the accompanying drawings in which
Fig. 1 illustrates a logistic flow in a distribution chain,
Figs. 2-8 illustrate monitoring of temperatures in accordance with a method according to an embodiment of the invention, and
Figs. 9-12 illustrate handing over of collis and pallets in a distribution chain, in accordance with an embodiment of the invention.

### DETAILED DESCRIPTION OF THE DRAWINGS

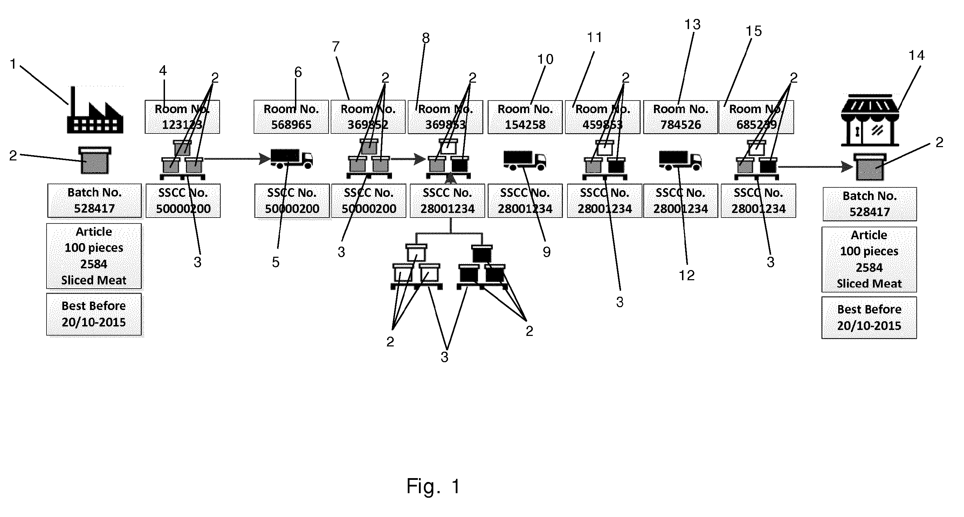

Fig. 1 illustrates a logistic flow in a distribution chain. Items are produced at a producer 1, where the items are packed into collis 2. Each colli 2 is provided with a colli ID in the form of a batch number, indicating the production batch which the items belong to. The collis 2 may further be provided with a 'Best before date' and/or information regarding the type of items contained in the colli 2.

The collis 2 are further packed onto pallets 3 at the producer 1. Each pallet 3 is provided with a unique pallet ID, allowing the pallet 3 to be tracked. A relationship is registered between the pallet 10 and the colli IDs of the collis 2 packed onto the pallet 3. This may, e.g., be done by reading machine readable codes of the collis 2 and the pallet 3. Thereby the collis 2 packed onto the pallet 3 can be tracked along with the pallet 3.

The packing of the collis 2 onto the pallet 3 takes place at a closed compartment, in the form of a room 4, at the premises of the producer 1. The room 4 is provided with a unique compartment ID. A relationship is registered between the compartment ID of the room 4 and the pallet I Ds of the pallets 3 arranged in the room 4. This may also be done by reading machine readable codes.

At a certain point in time, the pallet 3 is loaded onto a truck 5, in order to distribute the items contained in the collis 2 packed onto the pallet 3. The cargo compartment 6 of the truck 5 also forms a closed compartment, which is provided with a unique compartment ID. Accordingly, when the pallet 3 is loaded onto the truck 5, the relationship between the compartment ID of the room 4 at the producer 1 and the pallet ID of the pallet 3 is discontinued, and a relationship between the compartment ID of the cargo compartment 6 of the truck 5 and the pallet ID of the pallet 3 is registered. Thereby it is registered, that the pallet 3, and thereby the collis 2 packed onto the pallet 3, is now arranged inside the cargo compartment 6 of the truck 5.

When the truck 5 reaches a first intermediate storage facility, the pallet 3 is unloaded and arranged in a closed compartment, in the form of a room 7 at the first intermediate storage facility. Accordingly, the relationship between the compartment ID of the cargo compartment 6 of the truck 5 and the pallet ID of the pallet 3 is discontinued, and a relationship between the compartment ID of the room 7 at the first intermediate storage facility and the pallet ID of the pallet 3 is registered. Thereby it is registered, that the pallet 3, and thereby the collis 2 packed onto the pallet 3, is now arranged inside the room 7 at the first intermediate storage facility. The first intermediate storage facility could, e.g., be a storage facility belonging to the transport company owning the truck 5.

At a certain point in time, the pallet 3 is repacked at the first intermediate storage facility, i.e. the collis 2 are transferred to other pallets 3, and the new pallets 3 may have collis 2 originating from various producers 1 packed thereon, as indicated by the different colours of the collis 2. Accordingly, the relationship between the colli IDs of the collis 2 and the pallet ID of the previous pallet 3 is discontinued, and a relationship is registered between the colli IDs of the collis 2 and the pallet ID of the new pallet 3. Thereby the collis 2 can now be tracked along with the new pallet 3. Furthermore, the pallet 3 is transferred to a different closed compartment, in the form of a different room 8 at the first intermediate storage facility, which is also provided with a unique compartment ID. Accordingly, a relationship between the pallet ID of the pallet 3 and the compartment ID of the room 8 is registered, thereby registering that the pallet 3, and thereby the collis 2 packed onto the pallet 3, is now arranged inside the room 8.

At a certain point in time, the pallet 3 is loaded onto a new truck 9, i.e. the pallet 3 is arranged inside the cargo compartment 10 of the truck 9, the cargo compartment 10 constituting a closed compartment being provided with a unique compartment ID. Accordingly, the relationship between the pallet ID of the pallet 3 and the room 8 is discontinued, and a relationship between the pallet ID of the pallet 3 and the compartment ID of the cargo compartment 10 of the truck 9 is registered.

When the truck 9 reaches a second intermediate storage facility, the pallet 3 is unloaded from the truck 9 and arranged inside a closed compartment, in the form of a room 11 at the second intermediate storage facility. The second intermediate storage facility could, e.g., be a storage facility belonging to a retail chain, owning a number of retail stores. Accordingly, the relationship between the pallet ID of the pallet 3 and the compartment ID of the cargo compartment 10 of the truck 9 is discontinued, and a relationship between the pallet ID of the pallet 3 and the compartment ID of the room 11 at the second intermediate storage facility is registered.

At a certain point in time, the pallet 3 is loaded onto yet another truck 12, the cargo compartment 13 of which constitutes a closed compartment being provided with a unique compartment ID. Accordingly, the relationship between the pallet ID of the pallet 3 and the compartment ID of the room 11 is discontinued, and a relationship between the pallet ID of the pallet 3 and the compartment ID of the cargo compartment 13 of the truck 12 is registered.

Finally, the pallet 3 is unloaded from the truck 12 at a retail store 14, where it is arranged in a storage room 15, constituting a closed compartment being provided with a unique compartment ID. Accordingly, the relationship between the pallet ID of the pallet 3 and the compartment ID of the cargo compartment 13 of the truck 12 is discontinued, and a relationship between the pallet ID of the pallet 3 and the compartment ID of the storage room 15 is registered. Eventually, the pallet 3 is unpacked, and the items of the colli 2 are offered for sale in the retail store 14.

The temperature prevailing inside each of the closed compartments 4, 6, 7, 8, 10, 11, 13, 15 is monitored, and the temperature information is provided to a central data storage device, e.g. in the form of a central database and/or a cloud service. Furthermore, information regarding the registered relationships between collis 2 and pallets 3, and between pallets 3 and closed compartments 4, 6, 7, 8, 10, 11, 13, 15 is provided to the central data storage device. Thereby, it is possible to derive, from the information provided to the central data storage device, which temperatures a given colli 2 has been subjected to during the entire transport of the colli 2 from the producer 1 to the retail store 14. Furthermore, this information is readily accessible for any party of the distribution chain, such as the producer, the transport company or the retail chain.

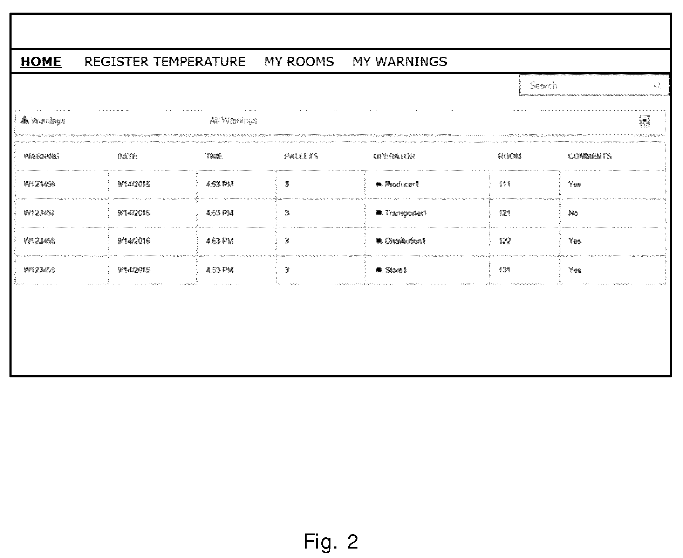

Figs. 2-7 illustrate monitoring of temperatures in accordance with a method according to an embodiment of the invention. Fig. 2 shows a screen dump presented to a user gaining access to temperature data stored at a central data storage device. The user may, e.g., access the information upon receipt of a pallet having a number of collis packed thereon. Accordingly, the user wishes to obtain temperature data relating to the collis packed onto the received pallet, e.g. in order to investigate whether or not the items in the collis have been subjected to temperatures outside an acceptable temperature range.

In the screen dump of Fig. 2, the user is presented with an overview of warnings which have been generated, corresponding to the collis being packed on the pallet. In the example illustrated in Fig. 2, four warnings have been generated. For each warning, a pallet ID ('pallets') and a compartment I D ('room') is listed. Furthermore, it is indicated which party of the distribution chain ('operator') was responsible for the pallet when the warning was generated. Finally, it is indicated whether or not one or more comments has/have been provided to each of the warnings ('comments').

Thus, the screen dump of Fig. 2 provides a quick overview regarding whether or not warnings have been generated, relating to the received pallet, but no details are provided regarding the warnings.

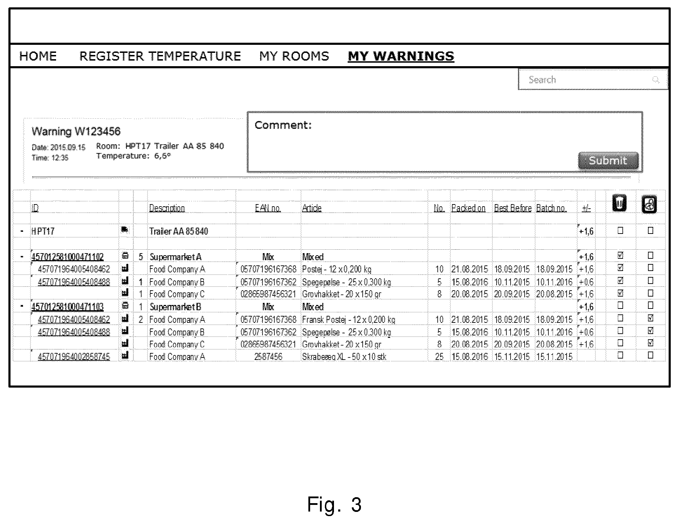

By selecting one of the warnings shown in Fig. 2, the screen dump of Fig. 3 is obtained. This screen dump provides further details regarding the selected warning, such as a list of pallet I Ds of the pallets arranged in the closed compartment when the warning was generated.

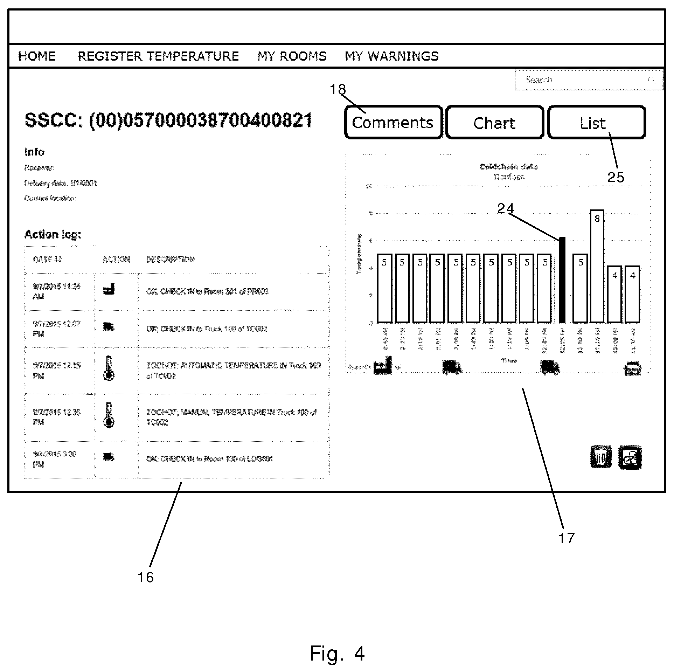

Selecting one of the pallets, the screen dump of Fig. 4 is displayed to the user. This screen dump provides detailed information regarding the selected pallet, in the form of an action log 16 and a temperature chart 17. The action log 16 provides information regarding in which closed compartments the pallet has been arranged, at which points in time. It further provides information regarding in which closed compartments the pallet has been subjected to temperatures outside an acceptable range. In this case, a too high temperature has been registered twice inside a cargo compartment of a truck.

The chart 17 provides a graphical representation of the temperatures experienced by the pallet. The two measurements of a too high temperature can clearly be seen as columns with an increased height in the chart 17. The measurement 24 is a manual measurement.

Clicking the 'Comments' button 18 in the screen dump of Fig. 4, will cause the chart 17 to be replaced by a comment field. This allows the user to view comments provided by other users, and to add further comments. Clicking the 'List' button 25 will cause the chart 17 to be replaced by a list view.

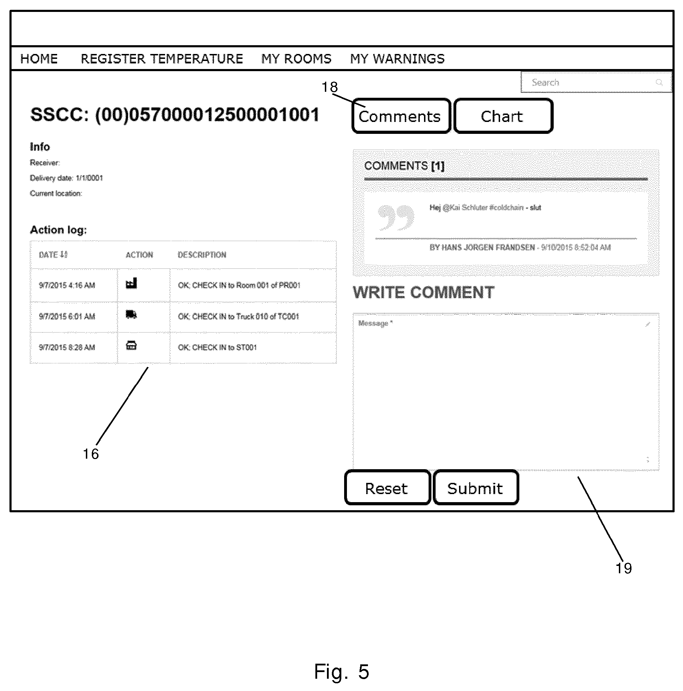

Fig. 5 shows a screen dump of a detailed view, similar to the screen dump of Fig. 4, but with the comment field 19 active, and relating to a different pallet. It can be seen that another user has previously added a comment. The comments could, e.g., be used for providing an explanation to a generated warning. For instance, a warning indicating a too high temperature level inside a closed compartment may prompt the party of the distribution chain being responsible for the pallets at the time of the warning to perform a manual temperature measurement of the temperature prevailing inside the closed compartment and/or of the temperature prevailing inside one or more pallets. Such a manual temperature measurement may reveal that the actual items have not been damaged, e.g. because the temperature prevailing inside the pallet is within an acceptable temperature range, because the increased temperature only occurred in a limited time period, or because the warning was generated due to a faulty temperature sensor. In this case, the party of the distribution chain may add a comment informing other users that the warning can be ignored, or that the issues giving rise to the warning have been taken care of.

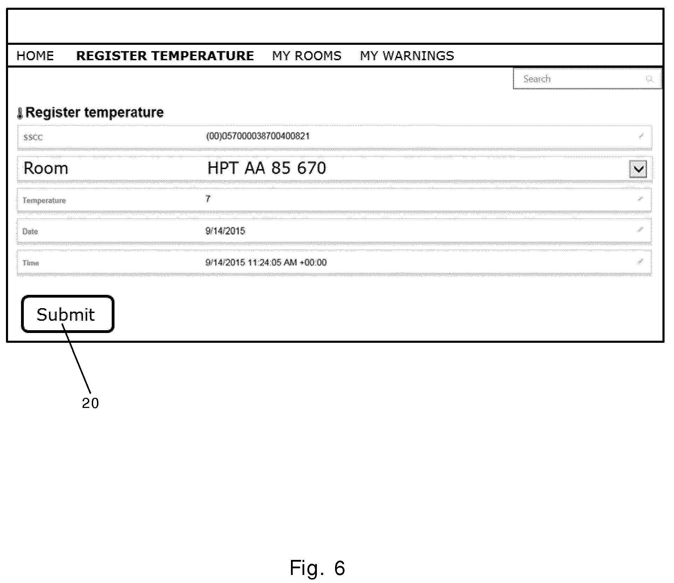

Fig. 6 is a screen dump illustrating registration of manually performed temperature measurements. As described above, manual temperature measurements can be performed by a user representing a party of the distribution chain. For instance, an air temperature prevailing inside a closed compartment, a temperature prevailing inside a pallet and/or a temperature prevailing inside a colli may be measured. The manually performed temperature measurements may be provided to the central data storage device, and added to the temperature data which is already available with respect to the pallet in question, or to all pallets arranged in a given closed compartment. In the screen dump of Fig. 6, a manual temperature measurement, a date and a time stamp is added to information relating to a pallet with a specific unique pallet ID (SSCC). When this information has been manually entered, the 'submit' button is clicked, and the manual temperature measurement is added to the temperature data relating to the pallet with the specified pallet ID, at the central data storage device.

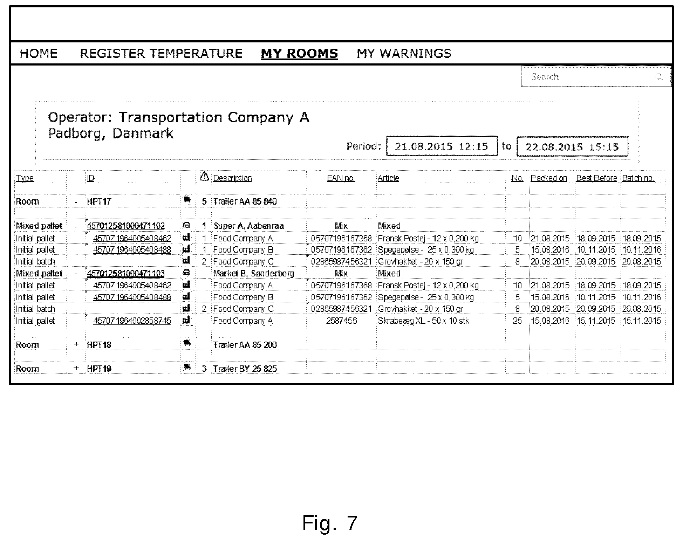

Fig. 7 is a screen dump showing details relating to a warning generated for a specific closed compartment. A list of pallets arranged inside the closed compartment is shown. Selecting one of the pallets will result in details relating to that pallet to be displayed.

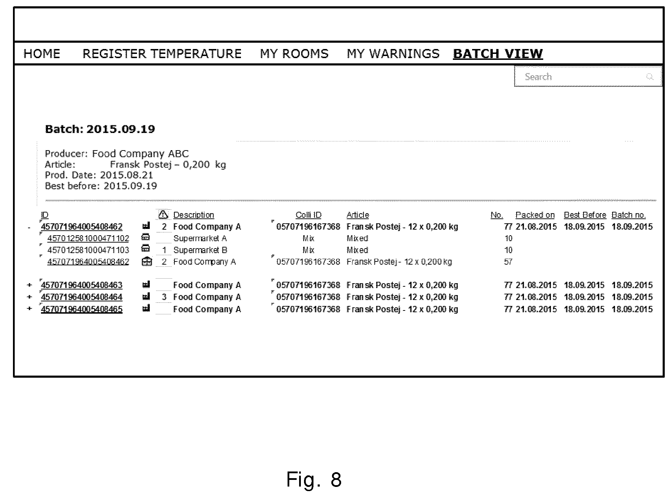

Fig. 8 is a screen dump showing details regarding a batch of goods. In particular, this view shows where various collis comprising goods belonging to a given batch of goods have been sent to. This may be very useful in the case that a batch of goods posing a risk to health and safety needs to be tracked.

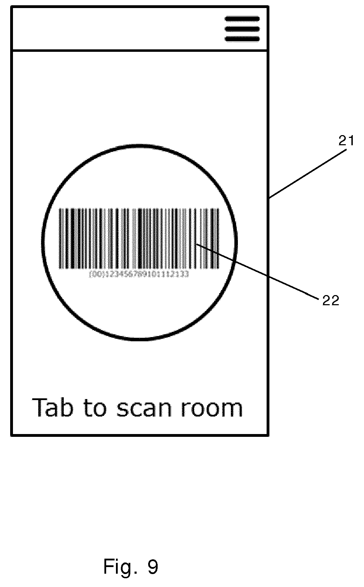

Figs. 9-12 illustrate handing over of collis and pallets in a distribution chain, in accordance with an embodiment of the invention. The handing over of collis and pallets is performed by means of a an app, allowing machine readable codes of the collis, pallets and closed compartments to be read by means of a handheld device 21, such as a cell phone, having the app installed thereon.

Initially, the handheld device 21 is arranged in the vicinity of a machine readable code 22, in the form of a barcode, mounted on or at a closed compartment. This is illustrated in Fig. 9. The machine readable code 22 represents a unique compartment ID of the closed compartment. The handheld device 21 is tapped, and the machine readable code 22 is read by the handheld device 21.

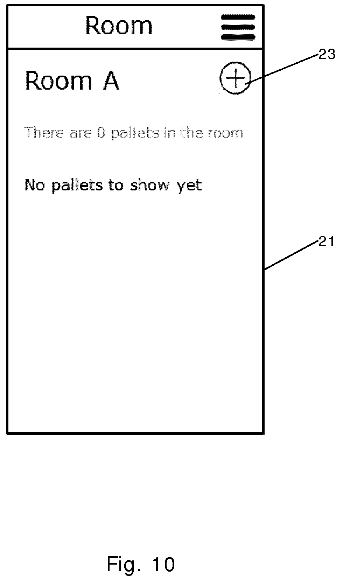

Next, the handheld device 21 displays information regarding the closed compartment, as shown in Fig. 10. In the illustrated example, there are no pallets inside the closed compartment. Clicking the '+' button 23 allows a pallet to be added to the closed compartment, essentially in the manner described above with reference to Fig. 9, i.e. by arranging the handheld device 21 in the vicinity of a machine readable code arranged on the pallet, and allowing the handheld device 21 to read the machine readable code. The machine readable code represents a unique pallet ID of the pallet. Thereby a relationship between the compartment ID of the closed compartment and the pallet ID of the pallet has been registered. It should be noted that the pallet should be physically arranged inside the closed compartment, the registered relationship thereby reflecting a real relationship between the pallet and the closed compartment.

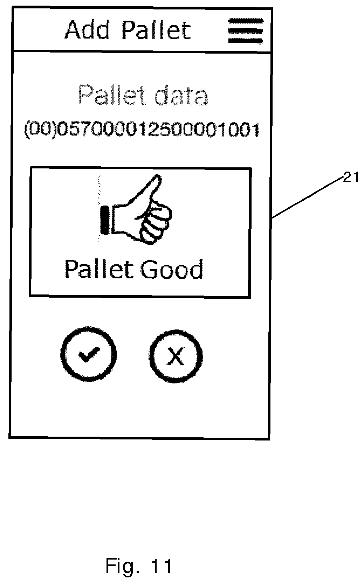

When the relationship has been registered, information regarding the relationship is provided to a central data storage device, and the app retrieves information relating to the pallet, which is already available at the central storage device. The retrieved information is displayed at the handheld device 21, as shown in Fig. 11. The displayed information illustrated in Fig. 11 indicates that the collis packed on the pallet have not been subjected to temperatures outside an acceptable range.

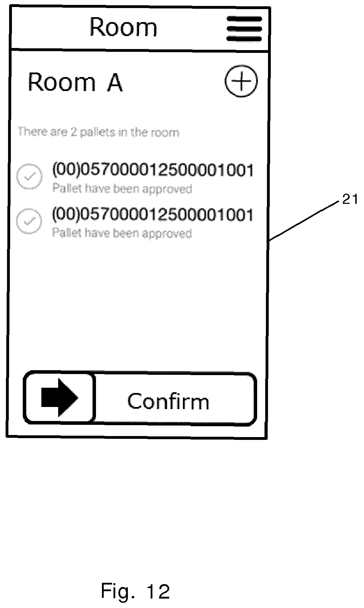

Fig. 12 is similar to Fig. 10, in that it shows a list of pallet arranged inside the closed compartments. However, in Fig. 12, relationships between the closed compartment and two pallets have been registered.

## Claims

1. A method for managing a retail distribution chain, in which items are distributed from one or more producers (1) to one or more retail stores (14), via one or more closed compartments (4, 6, 7, 8, 10, 11, 13, 15), said items being transported in collis (2) being packed on pallets (3), the method comprising the steps of:
- providing each colli (2) with a colli ID,
- providing each pallet (3) with a unique pallet ID,
- providing each closed compartment (4, 6, 7, 8, 10, 11, 13, 15) with a unique compartment ID,
- for each colli (2), registering a relationship between the colli (2) and each pallet (3) on which the colli (2) is packed during the distribution process,
- for each pallet (3), registering a relationship between the pallet (3) and each closed compartment (4, 6, 7, 8, 10, 11, 13, 15) in which the pallet (3) is positioned during the distribution process,
- for each closed compartment (4, 6, 7, 8, 10, 11, 13, 15), monitoring a temperature prevailing inside the closed compartment (4, 6, 7, 8, 10, 11, 13, 15),
- providing information regarding registered relationships between collis (2) and pallets (3), registered relationships between pallets (3) and closed compartments (4, 6, 7, 8, 10, 11, 13, 15) and monitored temperatures prevailing inside the closed compartments (4, 6, 7, 8, 10, 11, 13, 15) to a central data storage device, thereby providing unbroken temperature data relating to each colli (2) in the distribution chain from producer (1) to retail store (14), at the central data storage device.

2. A method according to claim 1, wherein the colli IDs and the unique pallet IDs are in the form of a machine readable code, and wherein the step of registering a relationship between a colli (2) and a pallet (3) comprises reading the machine readable codes of the colli ID and the pallet ID.

3. A method according to claim 1 or 2, wherein the unique pallet IDs and the unique compartment IDs are in the form of a machine readable code, and wherein the step of registering a relationship between a pallet (3) and a closed compartment (4, 6, 7, 8, 10, 11, 13, 15) comprises reading the machine readable codes of the pallet ID and the compartment ID.

4. A method according to any of the preceding claims, wherein the step of providing monitored temperatures to the central data storage device is performed in real time.

5. A method according to any of the preceding claims, further comprising the step of generating a warning in the case that a colli (2) is likely to have experienced temperatures outside an acceptable temperature range.

6. A method according to any of the preceding claims, further comprising the steps of performing a manual temperature measurement of a colli (2) and/or a pallet (3), establishing a relationship between the manual temperature measurement and the colli (2) and/or pallet (3), and adding the manual temperature measurement to the temperature data relating to the colli (2) and/or pallet (3) at the central data storage device.

7. A method according to any of the preceding claims, further comprising the steps of performing a manual temperature measurement inside a closed compartment (4, 6, 7, 8, 10, 11, 13, 15), establishing a relationship between the manual temperature measurement and the closed compartment (4, 6, 7, 8, 10, 11, 13, 15), and adding the manual temperature measurement to the temperature data relating to the closed compartment (4, 6, 7, 8, 10, 11, 13, 15) at the central data storage device.

8. A method according to any of the preceding claims, further comprising the step of a user accessing stored temperature data relating to a colli (2) and/or a pallet (3) when the colli (2) is transferred from one pallet (3) to another, and/or when the pallet (3) is transferred from one closed compartment (4, 6, 7, 8, 10, 11, 13, 15) to another.

9. A method according to any of the preceding claims, wherein at least one colli ID is provided to a subset of collis (2) comprising two or more collis (2) originating from a single batch of goods, the two or more collis (2) of the subset of collis (2) thereby being provided with the same colli I D.

10. A method according to any of the preceding claims, further comprising the steps of logging additional data relating to at least one closed compartment (4, 6, 7, 8, 10, 11, 13, 15) and storing the additional logged data at the central storage device along with the registered monitored temperatures relating to the closed compartment(s) (4, 6, 7, 8, 10, 11, 13, 15).

11. A method for managing a retail distribution chain, in which items are distributed from one or more producers (1) to one or more retail stores (14), via one or more closed compartments (4, 6, 7, 8, 10, 11, 13, 15), said items being transported in collis (2), the method comprising the steps of:
- providing each colli (2) with a unique colli ID,
- providing each closed compartment (4, 6, 7, 8, 10, 11, 13, 15) with a unique compartment ID,
- for each colli (2), registering a relationship between the colli (2) and each closed compartment (4, 6, 7, 8, 10, 11, 13, 15) in which the colli (2) is positioned during the distribution process,
- for each closed compartment (4, 6, 7, 8, 10, 11, 13, 15), monitoring a temperature prevailing inside the closed compartment (4, 6, 7, 8, 10, 11, 13, 15),
- providing information regarding registered relationships between collis (2) and closed compartments (4, 6, 7, 8, 10, 11, 13, 15) and monitored temperatures prevailing inside the closed compartments (4, 6, 7, 8, 10, 11, 13, 15) to a central data storage device, thereby providing unbroken temperature data relating to each colli (2) in the distribution chain from producer (1) to retail store (14), at the central data storage device.
